# EUROPEAN PATENT SPECIFICATION

(11) **EP 2 462 806 B1**
(45) Date of publication and mention of the grant of the patent: **07.09.2016**
(21) Application number: 11189540.5
(22) Date of filing: 17.11.2011
(51) Int. Cl.: A01N 31/02, A01P 1/00

(54) **Use of aliphatic alcohols in the production of a disinfectant for preventing contamination of the disinfectant with bacterial spores**
Verwendung aliphatischer Alkohole bei der Herstellung eines Desinfektionsmittels zur Verhinderung der Kontaminierung des Desinfektionsmittels mit Bakteriensporen
Utilisation d'alcools aliphatiques pour la production d'un désinfectant pour empêcher la contamination du désinfectant avec des spores bactériennes

(30) Priority: 10.12.2010 DE 102010054155
(43) Date of publication of application: 13.06.2012
(73) Proprietor: L'Air Liquide Société Anonyme pour l'Etude et l'Exploitation des Procédés Georges Claude, 75007 Paris (FR); Schülke & Mayr GmbH, 22851 Norderstedt (DE)
(72) Inventor: Steinhauer, Katrin, 22459 Hamburg (DE); Pauselius, Irene, 22846 Norderstedt (DE); Krellenberg, Alexandra, 23566 Lübeck (DE)
(74) Representative: Conan, Philippe Claude

(56) References cited:
- DE-A1- 19 901 526
- YOKO YASUDA-YASAKI ET AL: "Inhibition of Bacillus subtilis Spore Germination by Various Hydrophobic Compounds: Demonstration of Hydrophobic Character of the L-Alanine Receptor Site", JOURNAL OF BACTERIOLOGY, vol. 136, no. 2, 1 November 1978 (1978-11-01), pages 484-490, XP55020211,
- Harold R Curran ET AL: "SURVEY OF FOURTEEN METABOLIC INHIBITORS FOR THEIR EFFECT ON ENDOSPORE GERMINATION IN BACILLUS SUBTILIS", Journal of Bacteriology, 1 December 1961 (1961-12-01), pages 793-797, XP55020215, Retrieved from the Internet: URL:http://jb.asm.org/content/82/6/793.ful l.pdf [retrieved on 2012-02-24]
- "Octeniderm farblos - Produktinformation", , 1 March 2004 (2004-03-01), pages 1-2, XP55020274, Retrieved from the Internet: URL:http://www.mth-hohl.de/files/octenider m_farblos_pi.pdf [retrieved on 2012-02-24]
- "Primasept med - Produktinformation", , 1 October 2009 (2009-10-01), pages 1-2, XP55020275, Retrieved from the Internet: URL:http://www.schuelke.com/download/pdf/c de_lde_primaseptmed_prod.pdf [retrieved on 2012-02-24]
- "desderman pure - Product information", , 1 April 2009 (2009-04-01), pages 1-2, XP55020281, Retrieved from the Internet: URL:http://www.miscea.com/media/overige/de sderman_pure_prod.pdf [retrieved on 2012-02-24]
- YOSEF ALI ET AL: 'Chapter 12: Alcohols' DISINFECTION, STERILIZATION AND PRESERVATION, [Online] 01 January 2001, PHILADELPHIA, PA, U.S.A., pages 229 - 253, XP055055109 ISBN: 978-0-68-330740-5
- NATALIA GOTTIG ET AL: 'The Bacillus subtilis SinR and RapA Developmental Regulators Are Responsible for Inhibition of Spore Development by Alcohol' JOURNAL OF BACTERIOLOGY, [Online] 01 April 2005, pages 2662 - 2672, XP055055149 DOI: 10.1128/JB.187.8.2662-2672.2005 Retrieved from the Internet: <URL:http://www.ncbi.nlm.nih.gov/pmc/articl es/PMC1070374/pdf/1462-04.pdf> [retrieved on 2013-03-04]
- WHEELDON ET AL: "P9.01 Susceptibility of Germinating Clostridium difficile Spores to 70% Ethanol", JOURNAL OF HOSPITAL INFECTION, ACADEMIC PRESS, LONDON, GB, vol. 64, 1 January 2006 (2006-01-01), page S47, XP005843824, ISSN: 0195-6701, DOI: 10.1016/S0195-6701(06)60152-7
- RALPH TRUJILLO ET AL: 'Reversible Inhibition of Spore Germination by Alcohols' APPLIED MICROBIOLOGY, [Online] 01 October 1970, pages 620 - 623, XP055055211 Retrieved from the Internet: <URL:http://www.ncbi.nlm.nih.gov/pmc/articl es/PMC377003/pdf/applmicro00108-0114.pdf> [retrieved on 2013-03-05]
- B. SETLOW ET AL: 'Mechanisms of killing spores of Bacillus subtilis by acid, alkali and ethanol' JOURNAL OF APPLIED MICROBIOLOGY vol. 92, no. 2, 01 February 2002, pages 362 - 375, XP055109328 DOI: 10.1046/j.1365-2672.2002.01540.x ISSN: 1364-5072

## Description

The present invention relates to the use of aliphatic alcohols in the production of a disinfectant for reducing contamination of the disinfectant with bacterial spores. Furthermore, the invention relates to a process for producing a disinfectant, to which aliphatic alcohol is added to reduce contamination with bacterial spores.

Controlling bacteria plays a decisive role in a multitude of areas. Some bacteria form persistent stages (so-called spores), in which the complete metabolism is brought to a standstill. In this state, the bacteria are able to withstand even extreme environmental conditions and sometimes survive for several years to decades. Suitable chemical active ingredients for controlling spores are, inter alia, peracetic acid, hydrogen peroxide, ozone, sodium hypochlorite and mixtures of fruit acids with hydrogen peroxide.

Spore-forming bacteria include bacteria of the genus *Bacillus,* such as *Bacillus anthracis,* the pathogen of anthrax. Members of the spore-forming genus *Clostridium* are *Clostridium perfringens* (causes gaseous gangrene), *Clostridium botulinum* (causes botulism) and *Clostridium tetani* (causes tetanus). *Bacillus* spp. and *Clostridium* spp. have in past years become the focus of attention, particularly with regard to disinfection in the hospital sector.

According to the list of disinfectants and disinfection methods recognized and tested by the Robert Koch Institute (the central facility in the Federal Republic of Germany in the field of disease monitoring and prevention) (status 31 May 2007, 15th edition), it is necessary, for example for killing spores of *Clostridium tetani,* to destroy the spores by combustion or special (chemo)thermal disinfection methods (e.g. at superatmospheric pressure, 134°C, 1 h). However, for certain materials which may be carriers of bacterial spores, complete combustion, the use of the specified conventional chemical active ingredients or the (chemo)thermal treatment under superatmospheric pressure is not an option, for example in the case of hand disinfection.

Hand disinfection is one of the essential methods for breaking chains of infection in hospitals and in the form of "Surgical hand disinfection" (European Standard EN 12791), is an essential constituent of the measures for preventing wound infections in the case of surgical interventions. It is generally known that bacteria spores on the skin cannot be killed by customary alcohol-based disinfectants. Also, according to Hübner, N-O., Belo, H. and Kramer, A., GMS Krankenhaushyg. Interdiszip. 2006; 1(1): Doc 13 (ISSN 1863-5245), sporicidal hand disinfectants are virtually nonexistent or are very aggressive. The authors recommend that the surgeon removes loosely adhering spores from his hands by washing and then disinfects the hands with an alcoholic hand disinfectant. Hand washing leads to a lowering of the spore load.

The Federal Institute for Drugs and Medical Devices in the Federal Republic of Germany (BfArM) requires that disinfectants for surgical hand disinfection be produced as a spore-free product so that when using the surgical hand disinfectant (after hand washing), the hands are not recontaminated with spores. It is required to design the production process, by means of extensive measures, overall such that a spore-free product is obtained. The microbiological safety measures should be observed in the entire production chain (i.e. from the starting materials to the finished drug). Because the microbiological quality of the finished disinfectant is also influenced by the production of the packaging, the production of the packaging should be included in the risk analysis. A mandatory part of production should also be a filtration step through a 0.2 µm filter. Even during subsequent bottling, freedom from spores should be ensured. As a result, the method prescribed by the BfArM for the production of the required spore-free disinfectants for surgical hand disinfection is extraordinarily complex.

Setlow et al. (B. Setlow, C.A. Loshon, P.C. Genest, A.E. Cowan, C. Setlow and P. Setlow, Journal of Applied Microbiology 2002, 92, 362-365) describe the killing of spores of *Bacillus subtilis* by 70% strength ethanol at 65°C. In connection with mechanistic investigations described therein, reference is made to the killing of *B. subtilis* spores just by moist heat (cf. M. Paidhungat, B. Setlow, A. Driks, P. Setlow, Journal of Bacteriology 2000, 182, 5505-5512). An independent effect of ethanol on bacterial spores is not described.

Y. Yasuda-Yasaki et al. discloses that aliphatic alcohols, such as n-propanol inhibit the germination of bacterial spores such as *Bacillus subtilis* and that the concentration required to inhibit germination decreased as the chain length of the alcohol increases. (Y. Yasuda-Yasaki et al. J. Bacteriol. 1978, 136(2):484.

Y. Ali et al. discloses that inactivation of bactericidal spores with alcohols shows a general structure-activity correlation. For example, on one hand spores of *Bacillus anthracis* are killed within two to five minutes by 30% to 40% isopropanol; on the other hand, nine months' contact with 100% primary normal propanol dos not kill *Bacillus subtilis* and *Bacillus megatherium.* (Y. Ali et al. Chapter 12: "Alcohols, Disinfection, Sterilization and Preservation, 1 January 2001, pages 229-253, Philadelphia, PA, U.S.A. ISBN: 978-0-68-330740-5).

N. Gottig et al. discloses that treatment with subinhibitory concentrations of short chain (C₁-C₄) aliphatic alcohols that do not affect vegetative growth inhibit the initiation of spore development of *Bacillus subtilis.* (N. Gottig et al.; J. Bacteriol. Vol. 187, N°8, Apr. 2005, p. 2662-2672)

R. Trujillo et al. discloses, that low levels of (C₁-C₄) aliphatic alcohols are found to inhibit the process of germination of spores of *Bacillus subtilis* and *Bacillus pumilus,* that the extent of germination is dependent upon the concentration of alcohol and that this inhibition is reversible. (R. Trujillo et al. Applied Microbiology, Vol. 20 N° 4, Oct. 1970, p. 620-623 It was an object of the invention to provide a process for the production of disinfectants, with which the disinfectants can be produced free from, or at least with a low content of, bacterial spores. This process should be as simple as possible, i.e. as far as possible require no alteration to the plants.

This object is achieved according to a first aspect of the invention by using aliphatic alcohols in the production of a disinfectant for reducing contamination of the disinfectant with bacterial spores. According to a second aspect, the invention relates to a process for producing a disinfectant, to which aliphatic alcohol is added to reduce contamination with bacterial spores.

The invention is based inter alia on the fact that it has surprisingly been found that the ability of bacterial spores to survive upon long term contact with aliphatic alcohols is limited (RF up to > 2 log), and without it being necessary to use elevated temperature. This means that it is possible to at least partially dispense with the mentioned extensive safety measures during the production of low-spore and spore-free disinfectants. This was therefore not foreseeable because hitherto it has been assumed that the classic aggressive chemical active ingredients and/or thermal methods mentioned above are automatically required for the killing of spores. In this connection, it is not necessary in accordance with the invention to modify the formulation of the disinfectant (provided aliphatic alcohol is used in the production).

The killing of bacterial spores takes place here surprisingly at a temperature of less than 60°C, preferably less than 50°C, in particular less than 40°C, for example 15 to 35°C, such as 20 to 30°C.

The effect according to the invention, namely that spores in disinfectants can be controlled through the use of aliphatic alcohols and that disinfectants of this type are therefore autosterile offers advantages both for the production of the disinfectants and also for their use because opened packs are protected against attack by spores.

### 1. Aliphatic alcohol

The aliphatic alcohol is n-propanol, alone or in mixtures with ethanol or isopropanol. The concentration of n-propanol in the disinfectant is at least 10 per cent (in particular between 30 and 50 per cent by weight).

### 1.1 n-Propanol

If n-propanol is used as aliphatic alcohol in the disinfectant, then the concentration is preferably at least 4% by weight, more preferably at least 10% by weight, in particular at least 20% by weight.

### 1.2 Mixtures of isopropanol and n-propanol

In a further preferred embodiment, the disinfectant comprises a mixture of isopropanol and n-propanol as aliphatic alcohol. The concentration of isopropanol is preferably 5 to 55% by weight, more preferably 15 to 50% by weight, in particular 25 to 50% by weight, such as 28 to 48% by weight. The amount of n-propanol is preferably 5 to 50% by weight, preferably 10 to 45% by weight, in particular 20 to 35% by weight.

### 1.3 Mixtures of ethanol and n-propanol

In a further preferred embodiment, mixtures of ethanol and n-propanol are used as aliphatic alcohol in the disinfectant. A preferred concentration of ethanol in the disinfectant is 10 to 50% by weight, more preferably 20 to 30% by weight, such as, for example, about 25% by weight. A preferred concentration of n-propanol is 30 to 50% by weight, preferably 35 to 45% by weight.

In all embodiments of the invention, the aliphatic alcohol is n-propanol, and mixtures thereof (see the above statements under 1.1, 1.2 and 1.3).

The disinfectant obtained according to the invention can comprise, for example, one or more bispyridiniumalkanes as antimicrobial active ingredient. According to the invention, all suitable bispyridiniumalkanes can be used. The bispyridiniumalkane used according to the invention is preferably a bis[4-(substituted-amino)-1-pyridinium]alkane of the general formula I or II 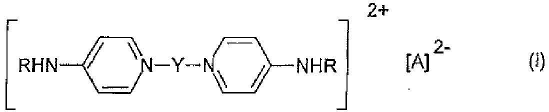 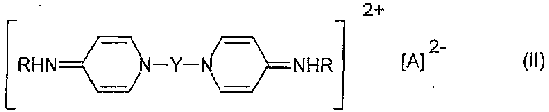 where Y is an alkylene group having 4 to 18 carbon atoms, R is an alkyl group having 6 to 18 carbon atoms or a cycloalkyl group having 5 to 7 carbon atoms or the phenyl radical, which may be substituted by a halogen atom, and A is one or more anions. In a particularly preferred embodiment, the bispyridiniumalkane used according to the invention is N,N'-(1,10-decanediyldi-1[4H]-pyridinyl-4-ylidene)bis(1-octanamine) dihydrochloride (octenidine dihydrochloride, hereinbelow octenidine). Moreover, octenidine disulphate is also suitable.

Alternatively to bispyridiniumalkane, such as octenidine, 2-biphenylol may also be present.

A typical amount of bispyridiniumalkane or 2-biphenylol is 0.02 to 5% by weight, preferably 0.03 to 3% by weight, in particular 0.04 to 0.5% by weight, for example 0.06 to 0.2% by weight, such as about 0.1% by weight.

Besides the obligatorily prescribed aliphatic alcohol and optionally bispyridiniumalkane or 2-biphenylol as antimicrobial active ingredient, the disinfectant produced according to the invention comprises, in a preferred embodiment, one or more of the following optional components:
- one or more surfactants,
- one or more solvents and/or
- one or more active ingredients and/or auxiliaries.

### 2. Surfactant

As optional constituent in the disinfectants produced according to the invention, cationic, anionic, amphoteric and/or nonionic surfactants are present, preferably amphoteric or nonionic surfactants.

As nonionic surfactant, all suitable nonionic surfactants can be used, preference being given to (i) (fatty) alcohol ethoxylates, (ii) sorbitan esters, (iii) alkyl glycosides (in particular alkyl polyglucosides), (iv) amine oxides and (v) ethylene oxide/propylene oxide block copolymers.

The (i) alcohol polyalkoxylates include fatty alcohol alkoxylates, e.g. isodecyl ethoxylates with different fractions of ethylene oxide, isotridecyl ethoxylates, polyethylene glycol ethers of stearyl, lauryl and cetyl and oleyl alcohol. Here, the alcohols may have been alkoxylated with ethylene oxide, propylene oxide or any desired mixtures of ethylene oxide and propylene oxide. Alcohol polyalkoxylates are known inter alia under the names Lutensol^{®}, Marlipal^{®}, Marlox^{®}, Brij^{®} and Plurafac^{®}. As nonionic surfactant, particular preference is given to lauryl alcohol ethoxylates.

Furthermore, the nonionic surfactants (ii) used are sorbitan esters, which are mostly present as oleates, stearates, laurates and palmitates and which are referred to as polysorbates (e.g. Tween^{®}).

Moreover, the nonionic surfactant may be a (iii) alkyl glycoside, such as an alkyl glucoside (i.e. an alkyl glycoside of glucose), more preferably a C₈- to C₂₀-alkyl polyglucose, in particular a C₈- to C₁₆-alkyl polyglucose of a fatty alcohol, with a laurylpolyglucose, a decylpolyglucose or a mixture thereof being preferred. The carbon chain length is 8 to 16 atoms in the case of cocoylpolyglucose, 12 to 16 carbon atoms in the case of laurylpolyglucose and likewise 8 to 16 atoms in the case of decylpolyglucose.

A typical amount of alkyl glycoside is 0.03 to 10% by weight, preferably 0.06 to 5% by weight, in particular 0.1 to 2% by weight.

According to the invention, as (iv) amine oxide it is in principle possible to use all suitable amine oxides. The amine oxides, which are N-oxides of tertiary amines, include aliphatic amine oxides, cyclic amine oxides (such as N-alkylmorpholine oxide) and aromatic amine oxides (such as pyridine N-oxides). In a preferred embodiment, the amine oxide has the general formula

R¹R²R³N-O,

in which R¹ is methyl, ethyl or 2-hydroxyethyl, R² is methyl, ethyl or 2-hydroxyethyl, R¹ and R² together may be morpholine, R³ is alkyl having 8 to 18 carbon atoms or R⁴CONH(CH₂)ₙ, where R⁴ is alkyl having 8 to 18 carbon atoms and n is in the range from 1 to 10, preferably 1 to 5, more preferably 2 to 4, and in particular 3, and may be 2-hydroxyethyl condensed with 1 to 2000 ethylene oxide, ethylene oxide/propylene oxide or propylene oxide units.

Exemplary amine oxides are cocamidopropylamine oxide, N-cocomorpholine oxide, decyldimethylamine oxide, dimethylcetylamine oxide, dimethylcocamine oxide, dimethyl-hydr. tallow-amine oxide, dimethyllaurylamine oxide, dimethylmyristylamine oxide, (2-hydroxyethyl)-cocamine oxide and oleamine oxide. See also "International Cosmetic Ingredient Dictionary and Handbook", 10th edition 2004, Volume 3, pages 2268-2275 (Surfactants-Cleansing Agents).

In a preferred embodiment, the amine oxide is cocamidopropylamine oxide, i.e. R⁴CO is the acyl radical derived from the fatty acids of coconut oil, n = 3, and R¹ and R2 are methyl. This product is sold as Rewominox B 204 by Goldschmidt, Federal Republic of Germany.

A typical amount of amine oxide is 0.03 to 10% by weight, preferably 0.06 to 5% by weight, in particular 0.1 to 2% by weight.

Amphoteric surfactants are likewise suitable as surfactant, for example betaines. Suitable betaines are described in EP 560 114 A2. Particular preference is given to cocamidopropylbetaine. A typical amount of betaine is 0.03 to 10% by weight, preferably 0.06 to 5% by weight, in particular 0.1 to 2% by weight.

Also suitable as surfactant are cationic surfactants, such as quaternary ammonium salts. In principle, according to the invention, it is possible to use all suitable quaternary ammonium compounds. Preferably, the quaternary ammonium compound is a dialkyldimethylammonium salt.

Quaternary ammonium salts used according to the invention are represented by the formula [R¹R²R³(CH₃)N]⁺[X]⁻, where R¹ to R³ may be identical or different and are selected from C₁- to C₃₀-alkykl, aralkyl, alkenyl and mixed groups, which may have one or more atoms selected from O, S, N and P, where R¹ to R³ are for example C₈- to C₁₈-alkyl, benzyl or methyl, preferably C₉- to C₁₈-alkyl, benzyl or methyl, such as C₁₆-alkyl, benzyl or methyl. X is an anion (of an inorganic or organic acid). Here, both anion and cation of the quaternary ammonium salt may be polyvalent ions, from which a stoichiometry [A ⁽ⁿ⁺¹⁾]ₘ[K^{(m+1)}]ₙ arises.

Suitable quaternary ammonium salts according to the invention are all quaternary ammonium salts of the aforementioned formula known in the prior art, as are disclosed, for example, in WO 00/63337, to which reference is hereby made. However, preference is given to using dialkyldimethylammonium salts, for example dialkyldimethylammonium chlorides, the alkyl chains of which are selected independently of one another from C₈-to C₁₈-alkyl, preferably C₉- to C₁₈-alkyl, such as C₁₆-alkyl. In the dialkyldimethylammonium salts, one of the methyl groups may be an alkoxylated, for example ethoxylated, hydromethyl group.

Quaternary ammonium salts used preferably according to the invention are compounds of the formulae [R¹N(CH₃)₃]⁺[X]⁻, [R¹R²N(CH₃)₂]⁺[X]⁻ and [R¹R²R³(CH₃)N]⁺[X]⁻, where R¹ to R³, independently of one another, are selected from C₈- to C₁₈-alkyl and -(CH₂-CHR⁴O)ₙ-R⁵, where n is a number from 1 to 20, preferably 1 to 5, and R⁴ and R⁵, which may be identical or different, are H and/or C₁- to C₄-aklyl, preferably H.

Exemplary anions and classes of anions of the quaternary ammonium salts used according to the invention are hydroxide, sulphate, hydrogensulphate, methosulphate, ethosulphate, lauryl sulphate, lauryl ether sulphate, cellulose sulphate, sulfamate, halide (fluoride, chloride, bromide, iodide), nitrite, nitrate, carbonate, hydrogencarbonate, phosphate, alkyl phosphate, metaphosphate, polyphosphate, thiocyanate (rhodanide), carboxylic acid salt such as benzoate, lactate, acetate, propionate, citrate, succinate, glutarate, adipate, toluenesulfonate (tosylate) and salicylate. Particularly preferred anions are chloride and propionate.

Particular preference is given to using the quaternary ammonium salts mecetronium etilsulphate (hexadecyl(ethyl)dimethylammonium ethyl sulphate) and benzalconium chloride.

### 3. Solvents

Moreover, the disinfectant used optionally comprises 3) solvents. Preferred solvents are glycols and water and mixtures thereof. A preferred solvent is water.

### 4. Active ingredients and/or auxiliaries

Exemplary active ingredients and/or auxiliaries which may optionally be present in disinfectants produced according to the invention are skincare additives, refatting agents, perfumes, fragrances, thickeners, pH regulators, humectants and dyes. These are inter alia:
- polyols which act as skincare additives, refatting agents and humectants, such as glycerol, erythritol, 1,2,6-hexanetriol, inositol, lactitol, maltitol, mannitol, methylpropanediol, phytantriol, polyglycerols, sorbitol and xylitol, with glycerol being particularly preferred,
- glycerol esters, preferably glycerol cocoate, isopropyl myristate, isopropyl palmitate, and triglycerides, which act as refatting agents, and/or
- allantoin and sodium gluconate, which act as skincare additive.

The mentioned effect, namely that aliphatic alcohols lead over time to the death of bacterial spores, is present at the typical pH values of disinfectants which are contemplated according to the invention. Preferred pH values of the disinfectants are in the range from 3 to 9, more preferably 4 to 8, such as 4.5 to 7, for example about 5.5. The desired pH can be adjusted for example with sodium lactate, citric acid or NaOH.

The disinfectants produced according to the invention are used in a customary manner on animate surfaces, in particular human skin.

Typically, disinfectants produced according to the invention are in the form of (alcohol-containing) aqueous solution. According to the invention, however, it is also possible to produce (alcohol-containing) semisolid disinfectants which are referred to below as semisolid preparations.

### 5. Semisolid preparations

Ointments (Latin unguenta) are spreadable preparations which are intended for use by application to or rubbing into the skin. They consist of one or more ointment bases (such as vaseline, wool grease, lanolin, etc.), into which the active ingredient is incorporated. The active ingredient should be dissolved or finely dispersed. In order to increase the solubility, ointments often comprise water or oils. In an ointment, however, the fat/oil fraction is higher than the water fraction.

In ointments according to the invention, the viscosity is generally 500 to 15 000 mPa·s, preferably 1000 to 10 000 mPa·s, measured using a rotary viscometer at 95 s⁻¹ and 20°C.

The disinfectants according to the invention are present for example as aqueous-alcoholic gels (hydrogels). Hydrogels are valued due to their transparency and the non-greasy character. Lipophilic gels (oleogels) are likewise used on account of their aesthetic appearance and their consistency-imparting properties. Gels are intended predominantly for external use and should be applied thinly.

A hydrogel is a mostly translucent mass which is produced with the help of gelatin, tragacanth, carbopol or similar swelling substances with the addition of water and glycerol. As a result of the evaporation of the water, they have a cooling effect.

Emulsion is understood as meaning preparations which are composed of immiscible liquids, e.g. oil and water. A distinction is made between W/O (water in oil) emulsions or O/W (oil in water) emulsions and ambiphilic emulsions. These have to be shaken vigorously prior to use. By adding an emulsifier, the very fine distribution of the liquids in one another is possible and the emulsions are stable as a result, i.e. the oil and the water do not separate again. Depending on the type of use, emulsions are intended for internal or external use. Emulsions for external use are often referred to as lotions. Here, an oil-in-water emulsion is present.

Preferably, the composition is present as hydrogel. Here, preference is given to an embodiment in which the composition is formulated as a composition that is to be applied topically (externally).

According to the invention, the composition can comprise further active ingredients which supplement the activity of, for example, octenidine dihydrochloride or 2-biphenylol and can possibly be used in a significantly lower concentration than in the known commercial products if they are combined with octenidine dihydrochloride or 2-biphenylol. As a result, the disadvantages present can sometimes be significantly reduced. These further active ingredients include: clotrimazole and other locally effective antimycotics, cortisones, tretinoin, benzoyl peroxide, acyclovir, local anaesthetics (e.g. benzocaine, lidocaine, polidocanol etc.), antibiotics, bufexamac etc.

### 6. Use

Disinfectants produced according to the present invention can be used for wound antisepsis and surgical hand disinfection. Alternatively, the disinfectants are used for surface disinfection.

According to one embodiment, the disinfectant produced according to the invention is used for the treatment of wounds. Here, preference is given to selecting an emulsifier-free formulation which includes a high degree of moisturizing factors (e.g. a gel).

The invention therefore offers the following advantages:
1. If contamination of a product with spores has occurred during a production process, it may suffice to eliminate the cause of the contamination and to leave the production plant in contact with the (alcohol-containing) disinfectant for a certain time; complete removal of spores from the production plant (by using the specified conventional chemical active ingredients or (chemo)thermal treatment under superatmospheric pressure) is not necessary; instead, the production plant can be operated again after a certain time.
2. Because spores of the medically more relevant anaerobic spore-forming bacteria such as, for example, *Clostridium* spp. are even more sensitive towards aliphatic alcohols than spores of aerobic spore-forming bacteria such as, for example, *Bacillus* spp., the spores which are more hazardous from a medically infectiological point of view are controlled even more easily.
3. In the examples below, it is shown that according to the invention it is also possible to control spores which are adapted on account of their storage in aliphatic alcohols.
4. According to the invention, the production of disinfectants can take place by formulating in the aliphatic alcohol during one of the first production process steps in order to keep the production plant low-spore or spore-free, although it is typically not absolutely necessary to alter the production process.

### 7. Refatting system

According to the invention, it has also been found that a specific combination of substances which act as refatting system further intensifies the effect of aliphatic alcohols towards bacterial spores. In a preferred embodiment, the refatting system consists of a combination of cetearyl octanoate and isopropyl myristate, or consists of cetearyl octanoate and myristyl alcohol. The preferred concentration of cetearyl octanoate in the disinfectant is 0.05 to 5% by weight, more preferably 0.1 to 1% by weight, in particular 0.2 to 0.4% by weight, such as about 0.3% by weight. The preferred amount of isopropyl myristate (or myristyl alcohol) is 0.2 to 5% by weight, in particular 0.5 to 3% by weight, such as 0.8 to 1.2% by weight, for example about 1.0% by weight.

The advantages of the present invention arise in particular from the following examples.

### Examples

### 1. Method A: Concentration test spores of Bacillus subtilis/Clostridium sporogenes

### 1.1 Instruments, nutrient media and spores used:

- anaerobic jar
- fixed pipettes 1 ml; 500 µl and 100 µl
- sterile glass pipettes 10 ml
- sterile spatulas
- sterile Schott bottles
- water bath 30°C
- CSA agar for *B. subtilis*
- Columbia agar for C. *sporogenes*
- *Bacillus subtilis* ATCC 6633 stored in a) H₂O or b) ethanol

Spore samples are provided commercially, sometimes as ethanolic solution (40% ethanol in water). Spores of this type are already adapted to ethanol and therefore more difficult to control, as can be seen from the examples below. Spores of this type adapted to ethanol are in practice also of less relevance than spore samples stored in water.

### - Clostridium sporogenes ATCC 19404 stored in H₂O

On account of the high resistance of the *Bacillus subtilis* and *Clostridium sporogenes* spores, these were used as indicator.

### 1.2 Diluents:

Germination medium:

| | **For 1 litre:** |
|---|---|
| 0.3 M Saccharose | 102.7 g |
| 10 mM Tris-HCl (pH 7.5) | 10 ml of the 1 M stock solution |
| 10 mM MgSO₄ × 7 H₂O | 2.46 g |
| 30 mM CaCl₂ × 6 H₂O | 6.57 g |
| 8 mM L-alanine | 0.71 g |
| (25 µg/ml Lysozyme) | 100 µl of the 250 mg/ml stock |

### 1.3 Test suspension:

The microbial count of the ordered spore solution is ascertained prior to the start of the experiment by plating out and counting and, if appropriate, the spore suspension is diluted. On the day of the experiment an initial microbial count (IGC) is ascertained again from the spore suspension used. By means of a counting of spores under the microscope in the Helber chamber, the comparison is drawn between spores which are actually present and the number of germinating spores. The initial spore number should be ca. 1 × 10⁷ CFU/ml.

### 1.4 Concentration of alcohols in % by volume:

| **Ethanol** | **Isopropanol** | **n-Propanol** |
|---|---|---|
| 40% | 10% | 10% |
| 60% | 30% | 30% |
| 80% | 50% | 50% |
| 95% | 70% | 70% |

### 1.5 Contact times:

Samples are taken every Tuesday and Friday over 7 weeks. The inoculated alcohols stand in the dark at room temperature during the contact times.

### 1.6 Procedure:

Each 50 ml per alcohol and concentration are pipetted into a sterile Schott flask, inoculated with 50 µl of spore suspension and incubated at room temperature. Additionally, per test suspension, a Schott flask containing 50 ml of H₂O is inoculated with 50 µl of test suspension. (42 flasks (13 alcohol conc. + 1 H₂O control × 3 germ suspension)).

Tests carried out in absence of n-propanol are for reference only and not according to the invention.

As blank value, after brief mixing, in each case 1 ml of the mixture is immediately pipetted to 9 ml of germination medium with lysozyme and 9 ml of germination medium without lysozyme. These tubes are incubated in a water bath for 15 min at 30°C and then further diluted in germination medium without lysozyme such that 0.5 ml of the 10° and in each case 0.1 ml of the 10°, 10⁻¹ dilution can be streaked out. The other samplings are made similarly on the days stated above.

### 1.7 Incubation and evaluation:

The plates are incubated at 36°C for 48 h *(B. subtilis* 24 h).

*C. sporogenes -* plates are incubated under anaerobic conditions.

### 1.8 Validation:

To check the nontoxicity of the diluent, 0.1 ml of the 10⁻⁴ dilution of the spore suspension is pipetted into 9.9 ml of germination medium and incubated in the water bath for 15 min at 30°C. 0.5 ml and 0.1 ml are then streaked out.

### 1.9 Lysozyme test:

In order to exclude false negative results, a lysozyme test is carried out in parallel (according to D.L. Popham, J. Helin, C.E. Costello and P. Setlow, Proc. Natl. Acad. Sci. USA, Volume 93, pages 15405 to 15410, December 1996).

### 2. Method B: Recovery rate of spores (Bacillus subtilis and Clostridium sporogenes)

### 2.1 Instruments, nutrient media and spores used

- glass pipettes 10 ml
- piston pipette 0.1-1.0 ml with tips
- Erlenmeyer flask
- stainless steel filter strip
- annealable tweezers
- sterile membrane filter 0.45 µm
- vacuum pump
- anaerobic jar
- generator and oxygen indicator
- incubator 30-35°C
- CASO agar
- Columbia agar base
- NaCl peptone buffer solution
- NaCl peptone buffer solution with LTH
- *Bacillus subtilis* ATCC 6633
- *Clostridium sporogenes* ATCC 19404

### 2.2 Procedure

The described procedure (mostly over 50 days) refers to a single determination, and is then reproduced 2x. The data from one experiment are shown.

### 2.2.1 Preparation of the reference suspensions

With the help of NaCl peptone buffer solution, the spore suspensions of *Bacillus subtilis* and *Clostridium sporogenes* are adjusted to a microbial count of 100 CFU/ml.

### 2.2.2 Sample preparation

Per product, for each determination, in each case 10 ml are removed aseptically and transferred in each case to a sterile Erlenmeyer flask.

Depending on the product, the respective flasks are inoculated in each case with 0.1 ml of a reference suspension *Bacillus subtilis.* Depending on the product, the respective flasks are inoculated with in each case 0.1 ml of a reference suspension of *Clostridium sporogenes.*

### 2.2.3 Filtration

Directly after inoculation, 2 flasks per product (1x inoculated with *Bacillus subtilis,* 1x inoculated with *Clostridium sporogenes*) are inhibited with 90 ml of buffer/inhibitor for 15 minutes:
Disinfectant 1 and 2: NaCl peptone buffer solution with LTH
Disinfectant 3: NaCl peptone buffer solution

After the inhibition, the samples are filtered (1 membrane filter per flask) and applied to agar:
*Bacillus subtilis:* CASO agar; incubation: 24 h at 30-35°C
*Clostridium sporogenes*: Columbia agar; incubation: 48 h at 30-35°C under anaerobic conditions

On the following days, in each case 2 flasks per day and product (1x inoculated with *Bacillus subtilis,* 1x inoculated with *Clostridium* sporogenes) are treated repeatedly according to the described directions.

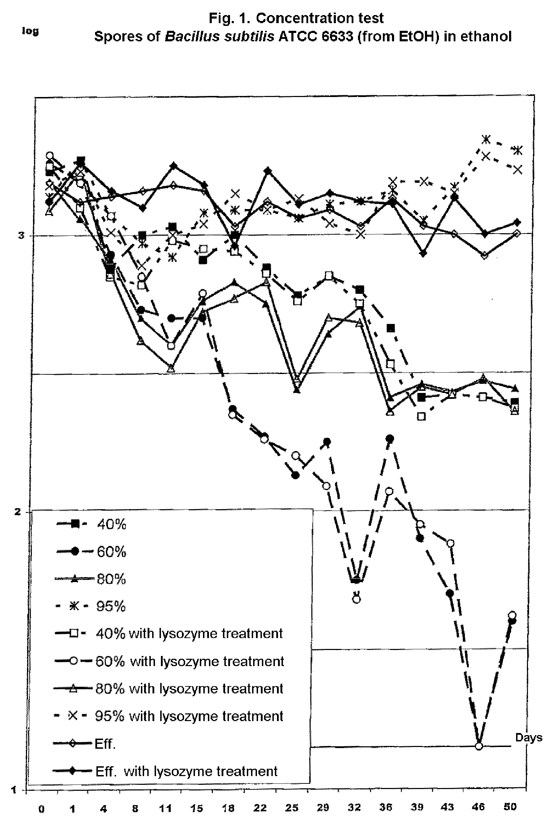

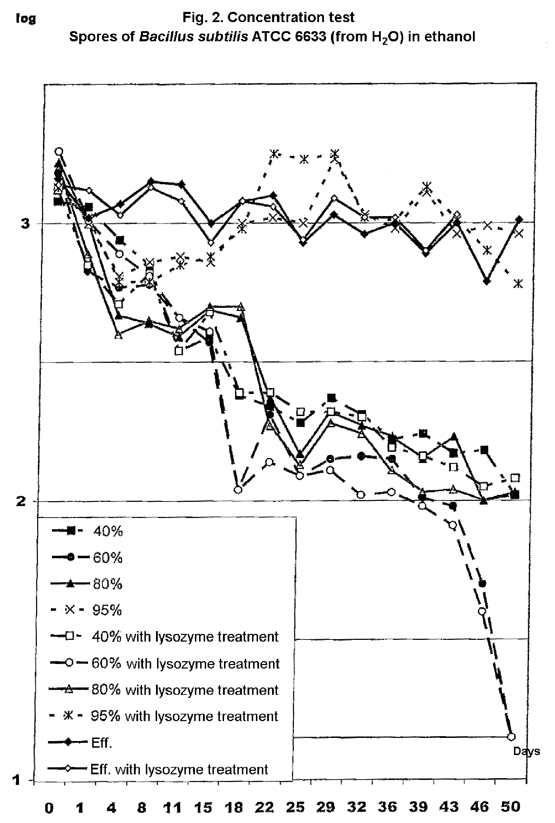

Figures 1 and 2 show the effectiveness of 40 to 80% strength ethanol against *Bacillus subtilis,* with 95% strength ethanol showing no effectiveness.

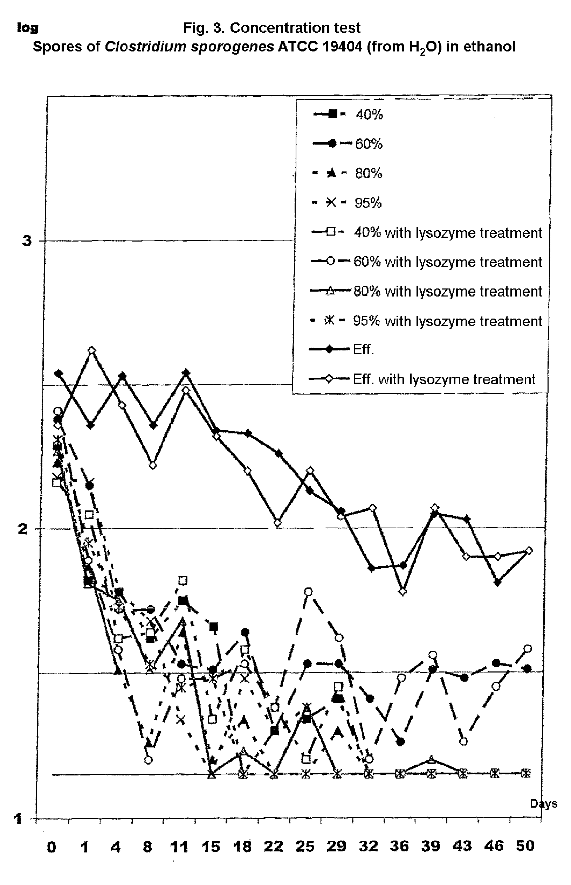

Figure 3 shows the effectiveness of 40% strength, 60% strength, 80% strength and 95% strength ethanol against *Clostridium sporogenes.*

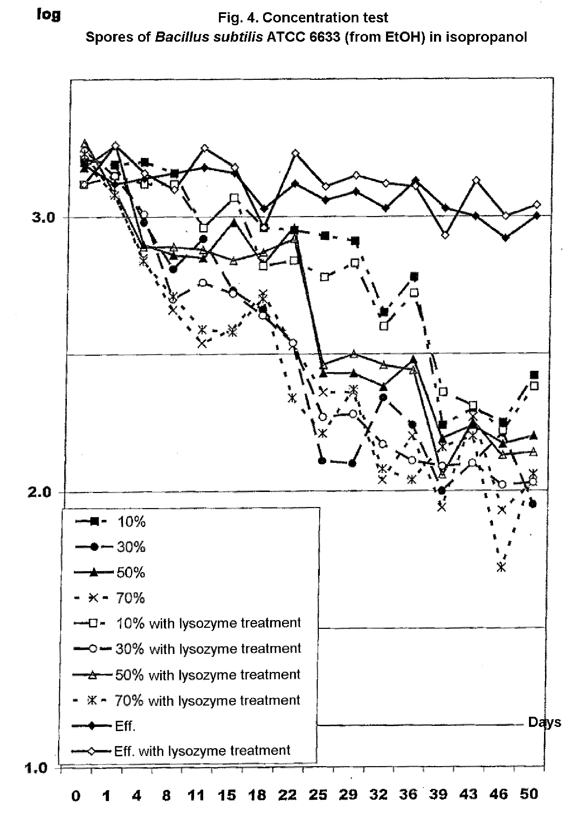

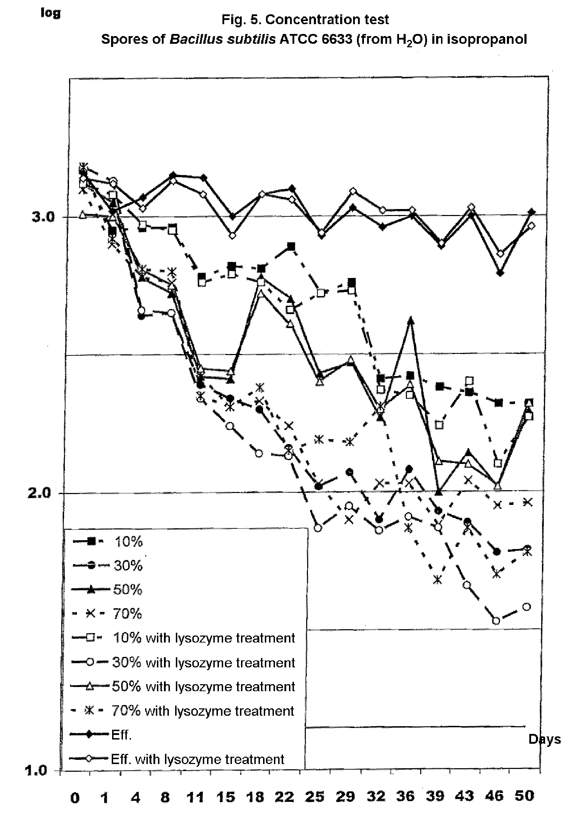

Figures 4 and 5 show the effectiveness of isopropanol against *Bacillus subtilis* above a concentration of just 10% by weight.

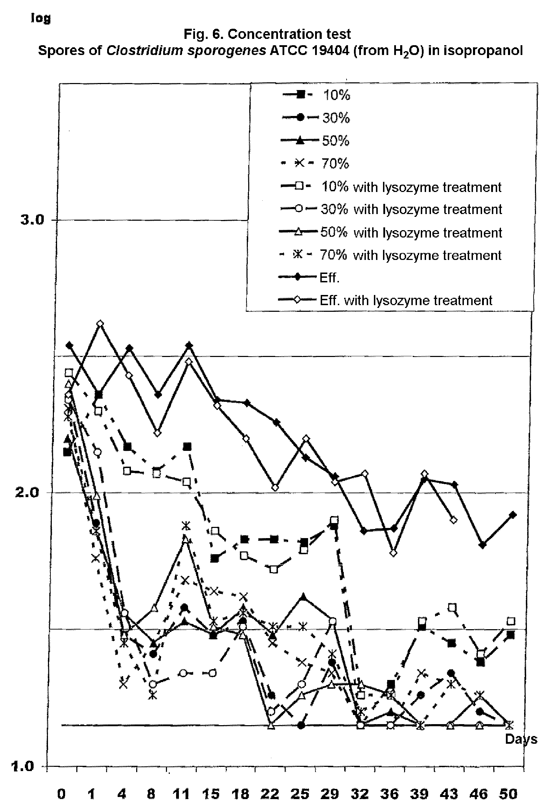

Figure 6 shows the effectiveness of isopropanol even in 10% strength concentration against *Clostridium sporogenes.*

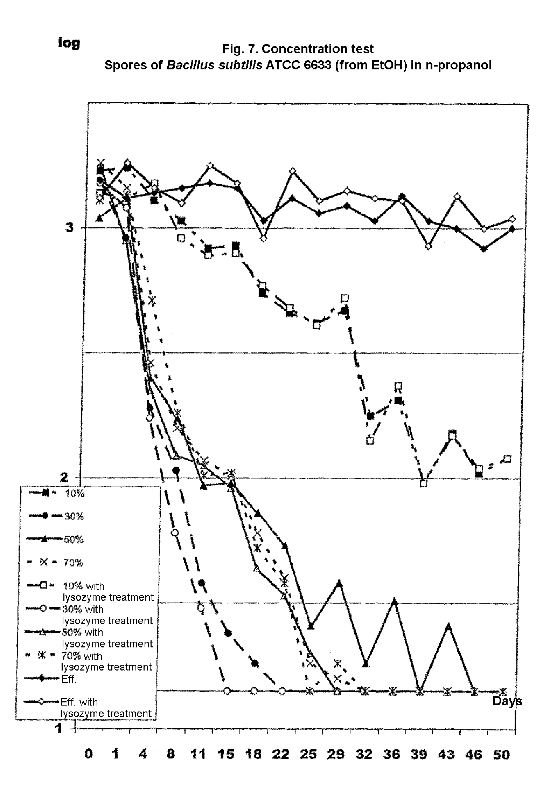

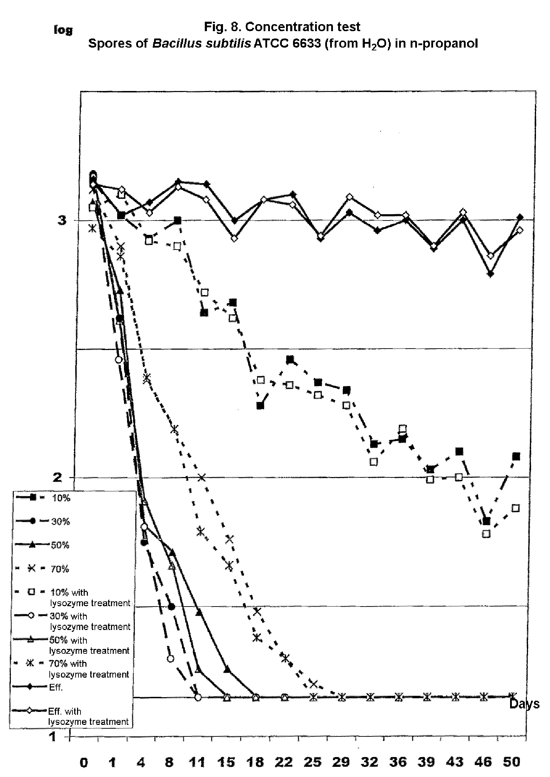

Figures 7 and 8 show that n-propanol even in a concentration of 10% by weight is more effective against *Bacillus subtilis* than isopropanol.

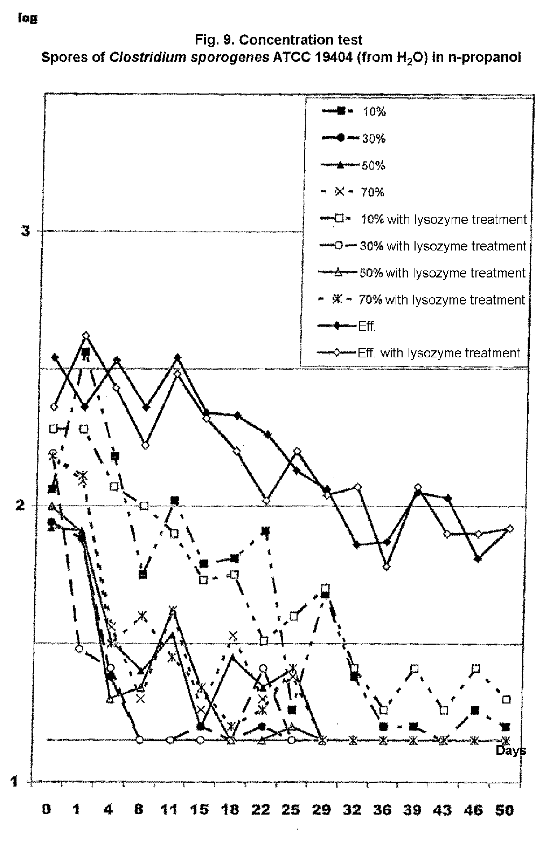

Figure 9 shows the effectiveness of n-propanol above a concentration of just 10% by weight against *Clostridium sporogenes.*

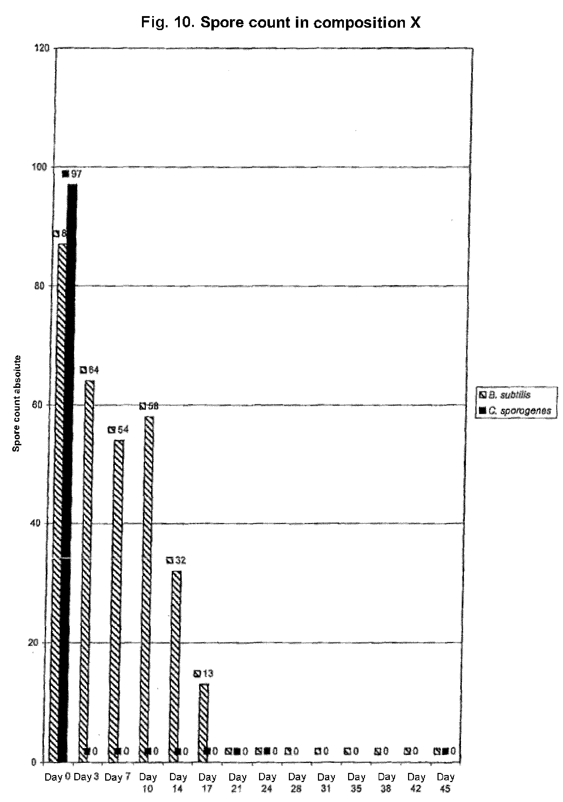

Figure 10 shows the spore count in composition X, which consists of 79% by weight of ethanol (denatured with 1% methyl ethyl ketone), 8.9% by weight of purified water, 0.5% by weight of sorbitol solution (70%), 0.2% by weight of Povidone K30, 1.0% by weight of isopropyl myristate, 0.3% by weight of cetearyl octanoate, 10.0% by weight of isopropanol and 0.1% by weight of 2-biphenylol.

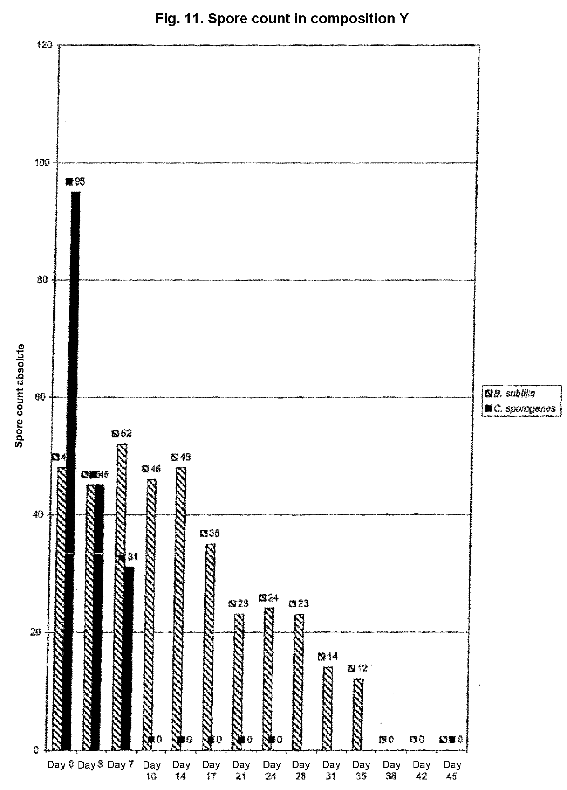

Figure 11 shows the spore count in composition Y, which consists of 28.0% by weight of isopropanol, 45.0% by weight of n-propanol, 0.3% by weight of lactic acid, 1.0% by weight of myristyl alcohol, 0.09% by weight of cetearyl octanoate, 0.5% by weight of Macrogol 4000, 0.75% by weight of sodium lactate solution (50% strength), 24.2599% by weight of purified water, 0.1% by weight of perfume and 0.06% by weight of dye.

## Claims

1. Use of aliphatic alcohols in the production of a disinfectant for reducing contamination of the disinfectant with bacterial spores, **characterized in that** said aliphatic alcohols is n-propanol or a mixture of n-propanol and ethanol or a mixture of n-propanol and isopropanol or a mixture of n-propanol, ethanol and isopropanol, **in that** the concentration of n-propanol in said disinfectant is at least 10% by weight and **in that** said use takes place at a temperature of less than 40°C.

2. Use according to Claim 1, **characterized in that** if n-propanol is used as aliphatic alcohol in the disinfectant, the concentration is at least 20 per cent by weight.

3. Use according to Claim 1, **characterized in that** if a mixture of isopropanol and n-propanol is used as aliphatic alcohol, the concentration of isopropanol is 25 to 50 percent by weight and the concentration of n-propanol is 20 to 35 percent by weight.

4. Use according to Claim 1, **characterized in that** if a mixture of ethanol and n-propanol is used as aliphatic alcohol, the concentration of ethanol is 20 to 30 percent by weight and the concentration of n-propanol is 35 to 45 percent by weight.

5. Use according to one of the preceding claims, **characterized in that** the disinfectant also comprises a refatting system, where the refatting system consists of a combination of (i) cetearyl octanoate with isopropyl myristate or (ii) cetearyl octanoate with myristyl alcohol.

6. Use according to one of the preceding claims, **characterized in that** the spores are selected from *Clostridium sporogenes* and *Bacillus subtilis.*

## Patentansprüche

1. Verwendung von aliphatischen Alkoholen bei der Herstellung eines Desinfektionsmittels zur Reduzierung der Verunreinigung des Desinfektionsmittels mit Bakteriensporen, **dadurch gekennzeichnet, dass** die aliphatischen Alkohole n-Propanol oder eine Mischung aus n-Propanol und Ethanol oder eine Mischung aus n-Propanol und Isopropanol oder eine Mischung aus n-Propanol, Ethanol und Isopropanol sind, dadurch, dass die Konzentration von n-Propanol in dem Desinfektionsmittel mindestens 10 Gew.-% beträgt und dadurch, dass die Verwendung bei einer Temperatur von weniger als 40 °C stattfindet.

2. Verwendung nach Anspruch 1, **dadurch gekennzeichnet, dass**, wenn n-Propanol als aliphatischer Alkohol im Desinfektionsmittel verwendet wird, die Konzentration mindestens 20 Gew.-% beträgt.

3. Verwendung nach Anspruch 1, **dadurch gekennzeichnet, dass**, wenn eine Mischung aus Isopropanol und n-Propanol als aliphatischer Alkohol verwendet wird, die Konzentration von Isopropanol 25 bis 50 Gew.-% und die Konzentration von n-Propanol 20 bis 35 Gew.-% beträgt.

4. Verfahren nach Anspruch 1, **dadurch gekennzeichnet, dass**, wenn eine Mischung aus Ethanol und n-Propanol als aliphatischer Alkohol verwendet wird, die Konzentration von Ethanol 20 bis 30 Gew.-% und die Konzentration von n-Propanol 35 bis 45 Gew.-% beträgt.

5. Verwendung nach einem der vorhergehenden Ansprüche, **dadurch gekennzeichnet, dass** das Desinfektionsmittel auch ein Rückfettungssystem umfasst, wobei das Rückfettungssystem aus einer Kombination aus (i) Cetearyloctanoat mit Isopropylmyristat oder (ii) Cetearyloctanoat mit Myristylalkohol besteht.

6. Verwendung nach einem der vorhergehenden Ansprüche, **dadurch gekennzeichnet, dass** die Sporen ausgewählt sind aus *Clostridium sporogenes* und *Bacillus subtilis.*

## Revendications

1. Utilisation d'alcools aliphatiques dans la production d'un désinfectant pour réduire la contamination du désinfectant par des spores bactériennes, **caractérisée en ce que** lesdits alcools aliphatiques sont le n-propanol ou un mélange de n-propanol et d'éthanol ou un mélange de n-propanol et d'isopropanol ou un mélange de n-propanol, d'éthanol et d'isopropanol, **en ce que** la concentration en n-propanol dans ledit désinfectant est au moins de 10 % en poids et **en ce que** ladite utilisation a lieu à une température inférieure à 40 °C.

2. Utilisation selon la revendication 1, **caractérisée en ce que** si le n-propanol est utilisé comme alcool aliphatique dans le désinfectant, la concentration est au moins de 20 pour cent en poids.

3. Utilisation selon la revendication 1, **caractérisée en ce que** si un mélange d'isopropanol et de n-propanol est utilisé comme alcool aliphatique, la concentration en isopropanol est de 25 à 50 pour cent en poids et la concentration en n-propanol est de 20 à 35 pour cent en poids.

4. Utilisation selon la revendication 1, **caractérisée en ce que** si un mélange d'éthanol et de n-propanol est utilisé comme alcool aliphatique, la concentration en éthanol est de 20 à 30 pour cent en poids et la concentration en n-propanol est de 35 à 45 pour cent en poids.

5. Utilisation selon l'une quelconque des revendications précédentes, **caractérisée en ce que** le désinfectant comprend également un système de regraissage, où le système de regraissage consiste en une combinaison (i) d'octanoate de cétéaryle avec du myristate d'isopropyle ou (ii) d'octanoate de cétéaryle avec de l'alcool myristylique.

6. Utilisation selon l'une quelconque des revendications précédentes, **caractérisée en ce que** les spores sont choisies parmi *Clostridium sporogenes* et *Bacillus subtilis.*
